# EUROPEAN PATENT APPLICATION

(11) **EP 1 906 689 A1**
(43) Date of publication of application: **02.04.2008**
(21) Application number: 06796625.9
(22) Date of filing: 22.08.2006
(51) Int. Cl.: H04Q 7/36, H04J 11/00

(54) **SCALABLE BANDWIDTH SYSTEM, RADIO BASE STATION APPARATUS AND RADIO TERMINAL APPARATUS**

(30) Priority: 26.08.2005 JP 2005246653
(71) Applicant: MATSUSHITA ELECTRIC INDUSTRIAL CO., LTD., Osaka 571-8501 (JP)
(72) Inventor: NAKA, Katsuyoshi, Matsushita Electric Industrial Co.,Ltd., 2-1-61,Shiromi,Chuo-ku, Osaka 540-6207 (JP); MATSUO, Hidenori, Matsushita Electric Industrial Co.,Ltd., 2-1-61,Shiromi,Chuo-ku, Osaka 540-6207 (JP); HAGA, Hiroki, Matsushita Electric Industrial Co.,Ltd., 2-1-61,Shiromi,Chuo-ku, Osaka 540-6207 (JP); XU, Ming, Matsushita Electric Industrial Co.,Ltd., 2-1-61,Shiromi,Chuo-ku, Osaka 540-6207 (JP)
(74) Representative: Grünecker, Kinkeldey, Stockmair & Schwanhäusser Anwaltssozietät
(86) International application number: PCT/JP2006/316411
(87) International publication number: WO 2007/023809

(57) **Abstract**

A scalable bandwidth system wherein even when various terminals having different bandwidth capabilities are existent in a cell, the unbalance of traffic in the maximum bandwidth can be reduced. Terminals (200) transmit their respective bandwidth capability information. A base station (100) assigns, based on the bandwidth capability information and identification signals transmitted from the terminals (200), communication bands to the respective terminals, and transmits, by use of a shared channel, information of the communication bands assigned to the terminals. In this way, the base station (100) can assign the bands to the terminals with the bandwidth capabilities of the respective terminals in the cell taken into account, whereby the unbalance of traffic in the maximum bandwidth can be reduced.

## Description

### Technical Field

The present invention relates to, particularly, a scalable bandwidth system, wireless base station and wireless terminal apparatus that carry out multicarrier communication by assigning on a per terminal basis flexibly a bandwidth less than a plurality of maximum bandwidths supported by the wireless base station apparatus as a communication band for each wireless terminal apparatus.

### Background Art

Conventionally, upon carrying out multicarrier communication represented by the OFDM (Orthogonal Frequency Division Multiplexing) scheme, a wireless communication system is proposed for supporting a plurality of maximum bandwidths at the wireless base station (hereinafter, simply a "base station") and enabling flexible assignment of bandwidths used for actual communication from the maximum bandwidths by each wireless communication terminal (hereinafter, simply a "terminal"). Such a wireless communication system is referred to as a "scalable bandwidth system."

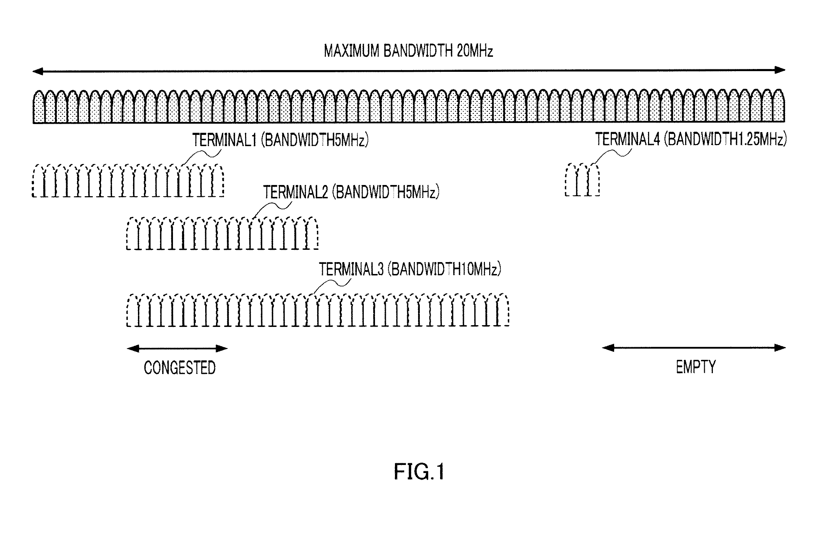

An overview of this scalable bandwidth system will be described with reference to FIG.1. FIG.1 shows examples of assigning bandwidths to terminals 1 to 4 where there are terminal 1, terminal 2, terminal 3 and terminal 4 with bandwidths where communication is possible (hereinafter "bandwidth capability") of 5 MHz, 5 MHz, 10 MHZ, and 1.25 MHz, respectively, and the maximum bandwidth of 20 MHz supported by the base station.

By the way, in this scalable bandwidth system, when each terminal carries out initial cell search such as symbol synchronization using a random frequency band and sets up communication independently, as shown in FIG. 1, traffic in the frequency domain is likely to become unbalanced. That is, in the frequency domain, parts where traffic is congested in the maximum bandwidth and parts where traffic is empty occur.

Conventionally, the technique disclosed in Non-Patent Document 1 is disclosed as a method to solve such a problem. In Non-Patent document 1, as shown in FIG.2, the base station transmits a synchronization channel and control channel from the band of the central portion of the maximum bandwidth (in this figure, 20 MHz). That is, the base station transmits the synchronization channel and control channel from the band determined by the system. A terminal receives the synchronization channel and control channel arranged in a band determined in advance as described above, recognizes the communication band assigned to the terminal itself and carries out communication using this communication band.

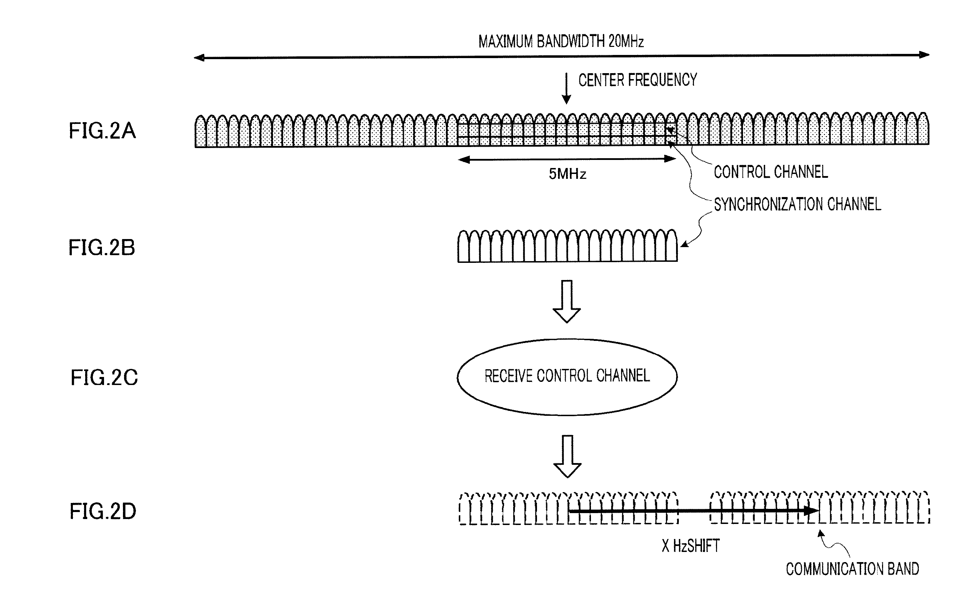

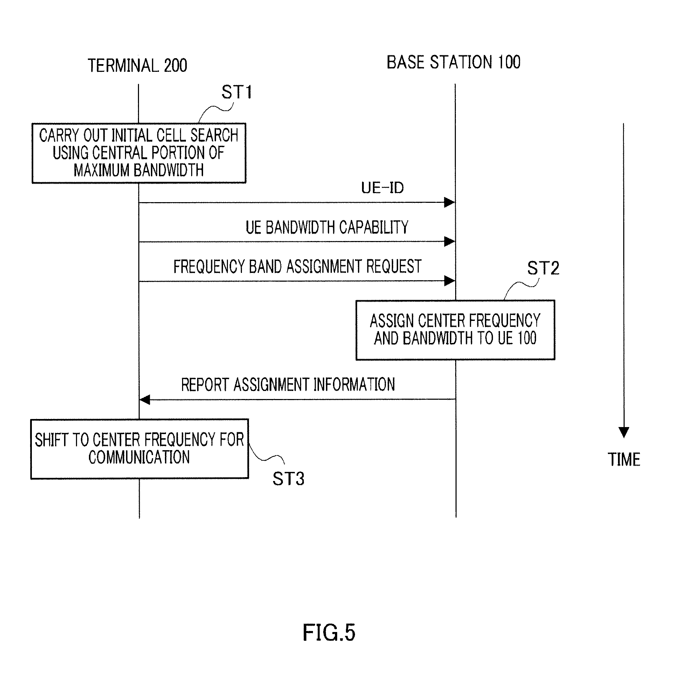

To be more specific, the terminal acquires cell synchronization using a synchronization channel arranged in a band (in FIG.2, 5 MHz arranged on the central portion of the maximum bandwidth) determined in advance. After acquiring cell synchronization, the terminal receives the control channel arranged in the same band as the synchronization channel (FIG.2C). Then, the terminal recognizes the communication band for the terminal itself according to band assignment information transmitted through this control channel. For example, as shown in FIG. 2D, when band assignment control information commands to shift X Hz in the positive direction from the center frequency, communication is carried out by using a band shifted by X Hz as the communication band.

In this way, by using the technique disclosed in Non-Patent Document 1, the communication band for the terminal can be assigned according to control by the base station compared to the case where a terminal determines a communication band for the terminal 1 itself independently, so that it is assumed to be able to reduce unbalance in traffic in the maximum bandwidth.
Non-Patent Document 1: "Physical layer items not for inclusion in Release 99," TR 25.833, 3GPP TSG RAN WG1, NTT DoCoMo, Inc.

### Disclosure of Invention

### Problems to be Solved by the Invention

However, even if the technique of Non-Patent Document 1 is used, it is not enough to reduce unbalance in traffic. For example, although there are a variety of terminals with variant bandwidth capabilities in a cell (for example, there is a terminal with bandwidth capability of 1.25 MHz or a terminal with bandwidth capability of 2.5 MHz), a method for reducing unbalance in traffic under such conditions is not sufficiently studied.

It is therefore an object of the present invention to provide a scalable bandwidth system, wireless base station apparatus and wireless terminal apparatus that, when there are a variety of terminals with variant bandwidth capabilities in a cell, can reduce unbalance in traffic in the maximum bandwidth.

### Means for Solving the Problem

The scalable bandwidth system according to the present invention that carries out multicarrier communication by assigning on a per terminal basis flexibly bandwidths less than a plurality of maximum bandwidths supported by a radio base station apparatus as a communication band of each radio terminal apparatus, adopts a configuration including: a base station apparatus that transmits a synchronization signal for cell synchronization in a band determined in advance from the maximum bandwidths; and a wireless terminal apparatus that, after acquiring cell synchronization using the received synchronization signal, transmits an identification signal of the wireless terminal apparatus and bandwidth capability information of the wireless terminal apparatus, to the wireless base station apparatus.

According to this configuration, the wireless base station apparatus is able to assign a band to each terminal taking into account the bandwidth capability of each terminal in a cell, so that it is possible to reduce unbalance in traffic in the maximum bandwidth.

The scalable bandwidth system according to the present invention that carries out multicarrier communication by assigning on a per terminal 1 basis flexibly bandwidths less than bandwidths of a plurality of maximum bandwidths supported by a wireless base station apparatus as a communication band of each wireless terminal apparatus, adopts a configuration including: a wireless base station apparatus that transmits a synchronization signal for cell synchronization in a band determined in advance from the maximum bandwidths and reports information of a plurality of candidate bands unique to a cell of the wireless base station apparatus using a shared channel in the same band as the determined band, to each wireless terminal apparatus; and a wireless terminal apparatus that selects a communication band with a bandwidth matching bandwidth capability of the wireless terminal apparatus from the candidate bands and carries out communication using the communication band.

According to this configuration, a terminal selects a communication band used for the terminal itself only from candidate bands designated by the base station, so that, compared to the case where the terminal selects a communication band at random from the maximum bandwidth, it is possible to reduce unbalance in traffic in the maximum bandwidth.

The scalable bandwidth system according to the present invention that carries out multicarrier communication by assigning on a per terminal 1 basis flexibly bandwidths less than a plurality of maximum bandwidths supported by a wireless base station apparatus as a communication band for each wireless terminal apparatus, adopts a configuration including a wireless base station apparatus that transmits a synchronization signal for cell synchronization in a band determined in advance from the maximum bandwidths and transmits congestion information for used subcarriers from the maximum bandwidths; and a wireless terminal apparatus that selects a communication band based on the congestion information and bandwidth capability of the wireless terminal apparatus and carries out communication using this communication band.

According to this configuration, a terminal is able to select a less congested band as a communication band of the terminal itself based on congestion information, so that it is possible to disperse traffic in the maximum bandwidth and reduce unbalance in traffic.

### Advantageous Effect of the Invention

According to the present invention, even when there are a variety of terminals with variant bandwidth capabilities in a cell, it is possible to realize a scalable bandwidth system, wireless base station apparatus and wireless terminal apparatus that can reduce unbalance in traffic in the maximum bandwidth.

### Brief Description of Drawings

FIG. 1 is a schematic view of a scalable bandwidth system;
FIG.2 is a schematic diagram showing how the synchronization channel and control channel of Non-Patent Document 1 are transmitted;
FIG. 3 is a block diagram showing a configuration of a base station according to Embodiment 1;
FIG.4 is a block diagram showing a configuration of a terminal according to Embodiment 1;
FIG.5 illustrates operation according Embodiment 1;
FIG.6 shows a configuration example of band assignment information;
FIG.7 is a block diagram showing a configuration of the base station according to Embodiment 2;
FIG.8 is a block diagram showing a configuration of the terminal according to Embodiment 2;
FIG.9 is an example of band assignment by the base station for the terminal;
FIG. 10 is a configuration example of candidate band information;
FIG.11 is a block diagram showing a configuration of the base station according to Embodiment 3;
FIG.12 is a block diagram showing a configuration of the terminal according to Embodiment 3;
FIG.13 illustrates operation according to Embodiment 3; and
FIG.14 shows an example of congestion information.

### Best Mode for Carrying Out the Invention

Hereinafter, embodiments of the present information will be described in detail with reference to the accompanying drawings.

### (Embodiment 1)

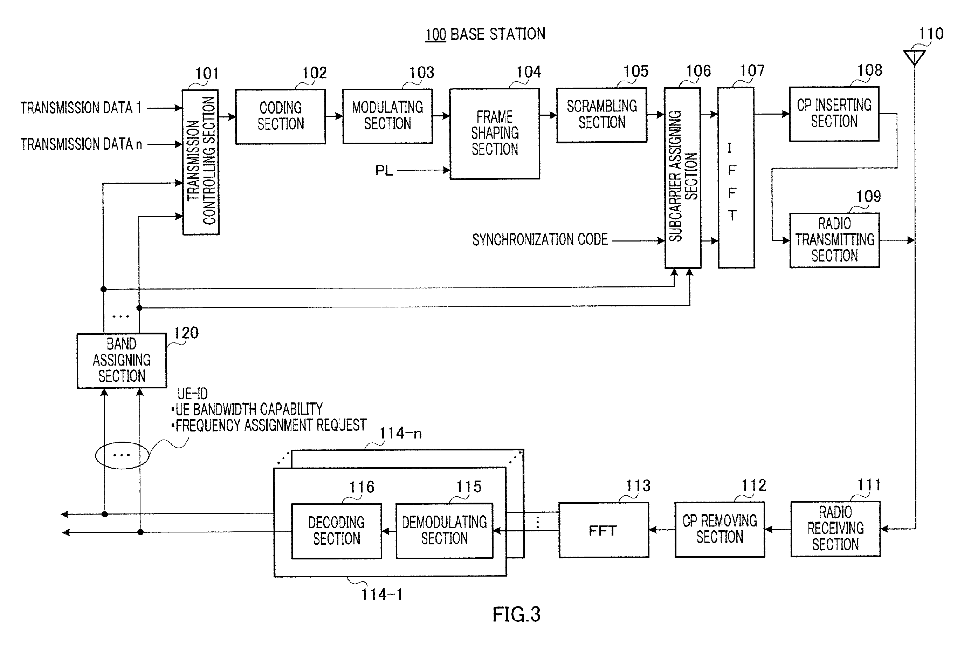

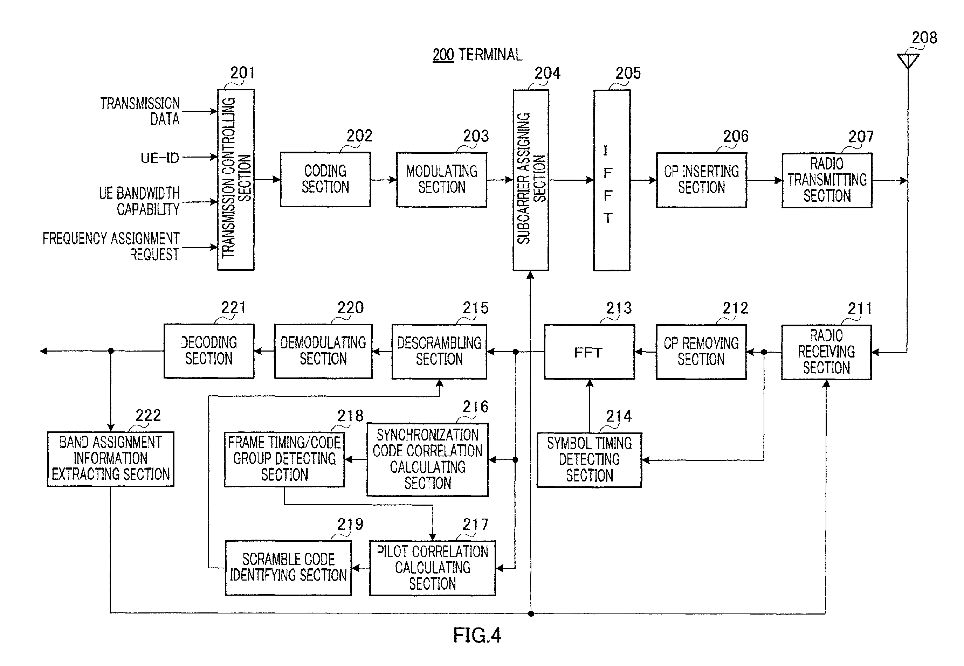

FIG.3 shows a configuration of a wireless base station apparatus (hereinafter, a "base station") used in a scalable bandwidth system of this embodiment and FIG.4 shows a configuration of a wireless terminal apparatus (hereinafter, a "terminal") that carries out communication with base station apparatus 100.

Similar to a base station of a general scalable bandwidth system, base station 100 assigns on a per terminal basis flexibly a bandwidth less than a plurality of the maximum bandwidths supported by the base station as a communication band of each terminal and carries out OFDM communication between the base station and each terminal.

Further, in this embodiment, base station 100 transmits a synchronization code (synchronization signal) and band assignment information to each terminal from a band (in this embodiment, a band (for example, 5 MHz) of the central portion of the maximum bandwidth) determined in advance in a cell.

First, the conf iguration of base station 100 shown in FIG.3 will be described. Base station 100 inputs transmission data 1 to n for terminals 1 to n, to transmission controlling section 101. Further, transmission controlling section 101 receives an input of band assignment information for terminals 1 to n assigned by band assigning section 120 described later. Transmission controlling section 101 selectively outputs inputted transmission data 1 to n and band assignment information to coding section 102. In this case, transmission controlling section 101 outputs band assignment information before starting data communication, and, on the other hand, outputs transmission data 1 to n during data communication.

Coding section 102 carries out error correction coding of data inputted from transmission controlling section 101 and sends out obtained encoded data to modulating section 103. Modulating section 103 carries out modulation processing such as QPSK (Quadrature Phase Shift Keying) and 16QAM (Quadrature Amplitude Modulation) of encoded data and sends out the obtained modulated signal to frame shaping section 104. Frame shaping section 104 shapes a transmission frame signal by adding the pilot signal (PL) to the modulated signal and sends out this signal to scrambling section 105. Scrambling section 105 carries out scrambling processing using a scrambling code unique to a cell and sends out the scrambled signal to subcarrier assigning section 106.

Subcarrier assigning section 106 assigns signals corresponding to transmission data 1 to n from signals for each terminal after scrambling processing, to subcarriers matching band assignment information, based on band assignment information of each terminal from band assigning section 120. In contrast with this, subcarrier assigning section 106 assigns signals matching band assignment information of each terminal from signals for each terminal after scrambling processing, to a band of the central portion of the maximum bandwidth. Similarly, subcarrier assigning section 106 assigns the inputted synchronization code to the band of the central portion of the maximum bandwidth upon cell search. Further, subcarrier assigning section 106 is formed with a serial-to-parallel conversion circuit.

Output of subcarrier assigning section 106 is processed at inverse fast Fourier transform section (IFFT) 107, is inserted a cyclic prefix (CP) at subsequent cyclic prefix inserting section 108, is subjected to predetermined radio processing such as digital-to-analogue conversion processing at radio transmitting section 109 and up-conversion to radio frequency and, then, is outputted from antenna 110.

Next, the receiving system of base station 100 will be described. Base station 100 inputs a signal received at antenna 110 to radio receiving section 111. The received signal is subjected to predetermined radio processing such as down-conversion and analogue-to-digital conversion processing at radio receiving section 111 to a baseband OFDM signal, is removed the cyclic prefix portion by CP removing section 112 and is inputted to fast Fourier transform section (FFT) 113. The signal subjected to a fast Fourier transform by FFT 113 is inputted to baseband processing units 114-1 to 114-n equaling the number of terminals.

The configurations of baseband processing units 114-1 to 114-n are the same, and so the configuration of one unit alone is shown in FIG.3. Demodulating section 115 of baseband signal unit 114-1 receives an input of a signal from terminal 1 obtained by FFT 113. The signal of terminal 1 demodulated by demodulating section 115 is decoded by decoding section 116. In this way, decoding section 116 outputs data transmitted from terminal 1. Further, similarly, data transmitted from terminals 2 to n can be obtained by other baseband processing units.

Band assigning section 120 inputs terminal identification information (UE-ID) of each terminal, bandwidth capability information (UE bandwidth capability) of each terminal and frequency assignment request information of each terminal transmitted from terminals 1 to n from received data and assigns a communication band to each terminal based on these items of information. In this way, base station 100 assigns a communication band to each terminal using bandwidth capability information reported from each terminal, so that it is possible to carry out band assignment processing such that unbalance in traffic in the maximum bandwidth supported by the base station does not occur.

Band assignment information for terminals 1 to n obtained by band assigning section 120 is transmitted to terminals 1 to n as described above immediately after initial cell search is completed. Further, band assignment information is inputted to subcarrier assigning section 106, and is used as a control signal for controlling as to which subcarriers transmission signals for terminals 1 to n are assigned and transmitted.

Next, the configuration of terminal 200 shown in FIG.4 will be described. Terminal 200 inputs transmission data, terminal identification information (UE-ID) of terminal 200, bandwidth capability information (UE bandwidth capability) of terminal 200 and frequency band assignment request information, to transmission controlling section 201. Transmission data, UE-ID information, UE bandwidth capability information and frequency band assignment information inputted from transmission controlling section 201 are outputted from transmission controlling section 201 selectively to coding section 202. In this case, transmission controlling section 202 outputs UE-ID information, UE bandwidth capability information and frequency band assignment request information prior to data communication, and, on the other hand, outputs transmission data during data communication.

Coding section 202 carries out error correction coding of data inputted from transmission controlling section 201 and sends out obtained encoded data to modulating section 203. Modulating section 203 carries out modulationprocessing such as QPSK and 16 QAM of encoded data and sends out the obtained modulated signal to subcarrier assigning section 204.

Subcarrier assigning section 204 assigns a signal corresponding to transmission data from modulated signals, to subcarriers matching band assignment information, based on band assignment information for terminal 200 that is extracted from band assignment information extracting section 222. In contrast with this, subcarrier assigning section 204 assigns a signal matching UE-ID information, UE bandwidth capability information and frequency band assignment request information from the modulated signals, to a band of the central portion of the maximum bandwidth (that is, the same band as the band where a synchronization signal and band assignment information are transmitted by base station100). Further, subcarrier assigning section 204 is formed with a serial-to-parallel conversion circuit.

Output of subcarrier assigning section 204 is processed at inverse fast Fourier transform section (IFFT) 205, is inserted a cyclic prefix at subsequent cyclic prefix (CP) inserting section 206, is subjected to predetermined radio processing such as digital-to-analogue conversion processing and up-conversion to radio frequency at radio transmitting section 207 and, then, is outputted from antenna 208.

Next, the receiving system of terminal 200 will be described. Terminal 200 inputs a signal received at antenna 208 to radio receiving section 211. Radio receiving section 211 carries out radio processing such as down-conversion and analogue-to-digital conversion processing of a received signal and obtains a baseband OFDM signal. Further, radio receiving section 211 outputs only an OFDM signal of a band (subcarrier) assigned to terminal 200, based on band assignment information extracted by band assignment information extracting section 222.

The baseband OFDM signal outputted from radio receiving section 211 is removed the cyclic prefix at cyclic prefix removing section (CP removing section) 212 and is inputted to fast Fourier transform section (FFT) 213. Further, the baseband OFDM signal is inputted to symbol timing detecting section 214. Symbol timing detecting section 214 calculates a correlation value between the original portion of the cyclic prefix of the baseband OFDM signal and the cyclic prefix portion of a signal with an offset of an effective symbol length from the OFDM signal, and detects the symbol timing by detecting the peak of this correlation value. By carrying out FFT processing at the symbol timing (FFT window timing) detected at symbol timing detecting section 214, FFT 213 obtains the signal before IFFT processing, and sends out this signal to descrambling section 215, synchronization code correlation calculating section 216 and pilot correlation calculating section 217.

Synchronization code correlation calculating section 216 calculates a correlation value between a signal outputted from FFT 213 and a replica of the synchronization code and sends out the correlation value to frame timing/code group detecting section 218. By detecting the peak of the correlation value, frame timing/code group detecting section 218 detects the frame timing and code group. Pilot correlation calculating section 217 calculates the correlation value between the signal outputted from FFT 213 and a plurality of candidate scramble codes (that is, the correlation value between the pilot arranged at the frame head and subjected to scrambling processing, and a plurality of candidate scrambling codes) and sends out the correlation value to scrambling code identifying section 219. Scrambling code identifying section 219 identifies that the scramble code with the maximum correlation value is the scramble code used in base station 100 and sends out the identified scramble code to descrambling section 215. Descrambling section 215 descrambles the signal outputted from FFT 213 using the identified scrambling code. Received data is obtained by demodulating the descrambled signal at demodulating section 220 and decoding the signal at decoding section 221.

Band assignment information extracting section 222 extracts band assignment information transmitted from base station 200 for terminal 200 from received data and sends out this band assignment information to subcarrier assigning section 204 and radio receiving section 211. In this way, terminal 200 transmits a signal by assigning the signal to the subcarrier matching band assignment information indicated from base station 100 and carries out reception processing of the signal assigned to the subcarrier matching band assignment information.

Next, operation of terminal 200 and base station 100 of this embodiment will be described with reference to FIG. 5.

In step ST1, terminal 200 carries out initial cell search using a synchronization signal (synchronization code) arranged on the central portion of the maximum bandwidth. Next, after initial cell search is completed, terminal 200 transmits UE-ID information of terminal 200, UE bandwidth capability information and frequency band assignment request, to the searched cell (base station 100). Terminal 200 transmits these items of information using the frequency of the central portion of the maximum bandwidth or the frequency that makes a pair of the frequency of the central portion of the maximum bandwidth.

WhenreceivingUE-ID, UEbandwidthcapabilityand frequency band assignment request, in step ST2, by referring to the bandwidth capability of a terminal at band assigning section 120, base station 100 assigns the communication band (the center frequency and bandwidth) to the terminal and reports this assignment information to this terminal. In this case, base station 100 forms a shared channel embedded with UE-ID and band assignment information and transmits this shared channel using the central portion of the maximum bandwidth (that is, the same band as the band subjected to cell search by the terminal). Terminal 200 decodes band assignment information for terminal 200 in this shared channel, and, in step ST3, carries out shifting such that the frequency for use (that is, the assigning band at subcarrier assigning section 204 and a passband at radio receiving section 211) matches band assignment information.

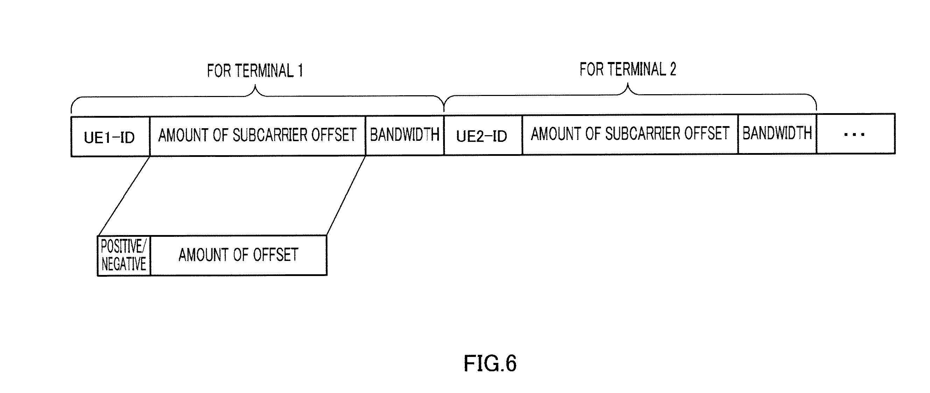

Band assignment information is formed with center frequency information and bandwidth information. FIG.6 shows a configuration example of band assignment information transmitted to each terminal from base station 100 using the shared channel. In this embodiment, "center frequency information" is represented by the amount of subcarrier offset from the central portion of the maximum bandwidth. As a result, it is possible to designate the center frequency using a smaller number ofbits. Then, terminal 200 refers to the portion of UE-ID in the format at first, and, if the ID matches the ID of terminal 200, refers to the subsequent amount of subcarrier offset (frequency shift amount information assigned to terminal 200) and assigning bandwidth information.

As described above, according to this embodiment, terminal 200 transmits bandwidth capability information of terminal 200 and base station 100 assigns a communication band on a per terminal basis, based on an identification signal and bandwidth capability information transmitted from terminal 200 and transmits communication band information of each assigned terminal using a shared channel, so that, even when there are a variety of terminals with variant bandwidth capabilities in a cell, it is possible to realize a scalable bandwidth system that is able to reduce unbalance in traffic in the maximum bandwidth.

### (Embodiment 2)

Embodiment 1 proposes that the terminal reports bandwidth capability of the terminal to the base station, and the base station assigns a communication band of each terminal by referring to bandwidth capability of each terminal and indicates assigned communication band information of each terminal using the shared channel, so that unbalance in traffic is reduced in the maximum bandwidth.

In contrast with this, Embodiment 2 proposes that a base station indicates candidate band information to each terminal using such as a common channel and a terminal selects a band matching bandwidth capability of the terminal from this candidate band information, so that unbalance in traffic is reduced in the maximum bandwidth.

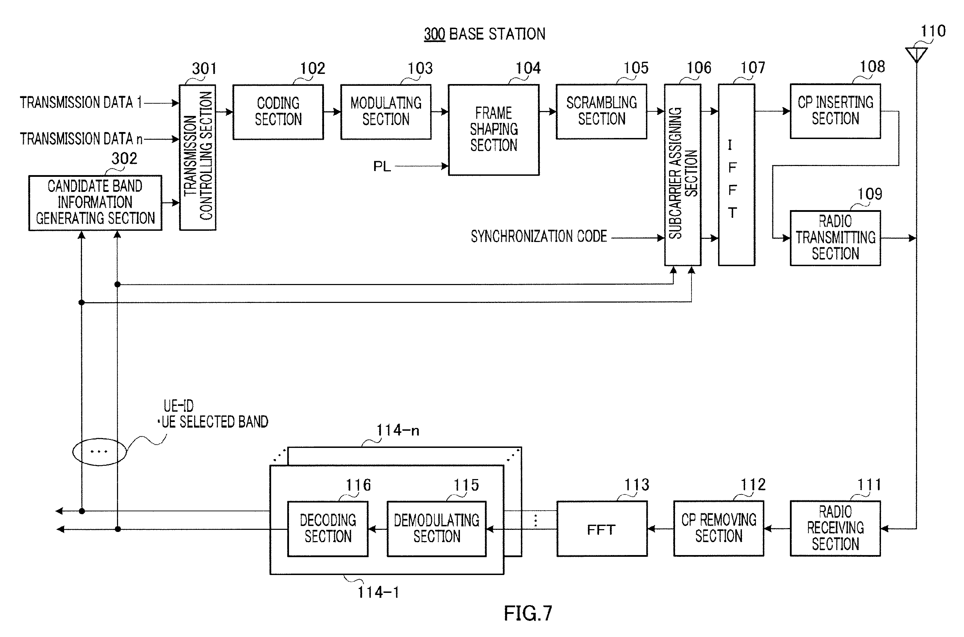

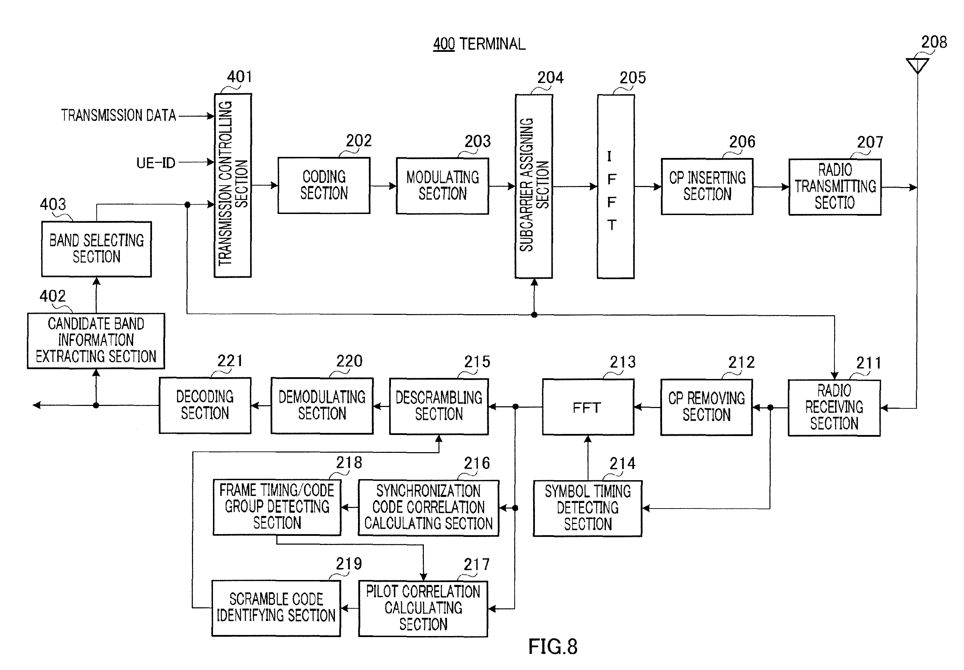

FIG.7 shows a configuration of the base station of this embodiment and the same reference numerals will be assigned to the corresponding parts of FIG.3. FIG.8 shows a configuration of a terminal of this embodiment and the same reference numerals will be assigned to the corresponding parts of FIG.4.

First, the configuration of base station 300 will be described with reference to FIG.7. Here, description of parts with the same function as in base station 100 of FIG.3 will be omitted and parts with different function will be described. In addition to transmission data for terminal 1 to n, base station 300 inputs candidate band information formed by candidate band information generating section 302 to transmission controlling section 301. Transmission controlling section 301 selectively outputs transmission data 1 to n and candidate band information.

Candidate band information generating section 302 inputs selected band information (UE selected band) selected by each terminal and generates candidate band information based on this information. To be more specific, candidate band information generating section 302 generates candidate band information from which bands already selected by a given terminal or bands already selected by many terminals are removed.

Next, the configuration of the terminal will be described with reference to FIG.8. Here, description of parts with the same function as terminal 200 of FIG.4 will be omitted and parts with different functions will not be described. Terminal 400 inputs transmission data, terminal identification information (UE-ID) of terminal 400 and UE selected band information selected by band selecting section 403, to transmission controlling section 401. Transmission data, UE-ID information and UE selected band information inputted to transmission controlling section 401 are outputted selectively to coding section 202 from transmission controlling section 401.

Terminal 400 has candidate band information extracting section 402. Candidate band information extracting section 402 extracts candidate band information transmitted in common to each terminal from base station 300, from received data and sends out candidate band information to band selecting section 403. Band selecting section 403 selects a band matching bandwidth capability of terminal 400 from candidate bands and sends out the selected band to transmission controlling section 401 as UE selected band information.

Next, operation of base station 300 and terminal 400 of this embodiment will be described.

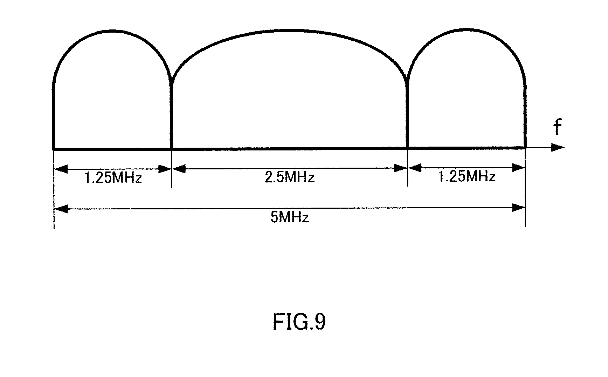

Here, in the scalable bandwidth system of this embodiment, band assignment provided to terminal 400 is as shown in FIG.9. Base station 300 indicates band assignment to each terminal using the common control channel as candidate band information. Terminal 400 decodes the common control channel after initial cell search, selects the candidate band using a bandwidth matching bandwidth capability of terminal 400 from candidate bands, reports selected band information to base station 300 and adjusts the band for use of terminal 400 to the selected band.

Further, for example, when bandwidth capability of terminal 400 is 1.25 MHz and there are a plurality of center frequency information where the bandwidth is used as candidate bands as shown in FIG.9, terminal 400 selects the band for use from a plurality of center frequency information at random. In this case, the band for use may be selected based on the received SNR in a plurality of center frequencies. Terminal 400 selects a band matching the bandwidth capability of terminal 400 (when there are a plurality of bands matching the bandwidth capability, the band is selected from bands at random), and starts communication setup.

Further, when a band is congested after communication setup and when traffic becomes unbalanced due to random selection, by transmitting to several terminals dedicated control information for shifting the band to bands of the same bandwidth, it is possible to reduce unbalance in traffic.

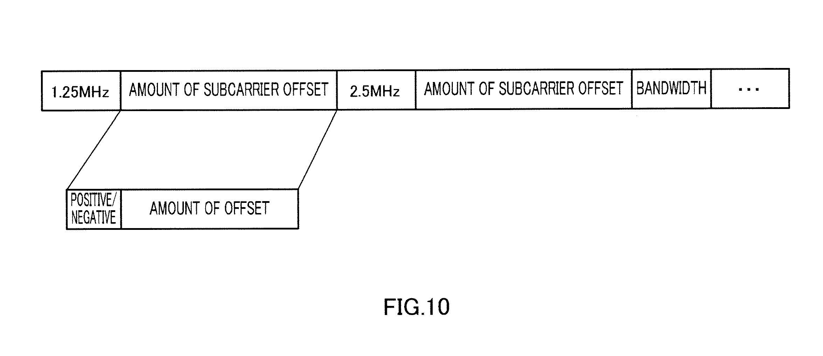

FIG. 10 shows an example of a transmission format of candidate band information for transmission using the common control channel by base station 300. This candidate band information needs not to be assigned on a per terminal basis, and only a set of information of the bandwidth and center frequency determined by a cell in advance needs to be reported. In this embodiment, as shown in FIG.10, the amount of subcarrier offset from the center frequency of the maximum bandwidth shown in FIG.2 is used as a parameter showing each candidate band. To be more specific, the amount of subcarrier offset is represented by information showing offset in the positive or negative direction from the center frequency of the maximum bandwidth and the number of subcarriers showing how many subcarriers the offset is carried out (the amount of offset). In this way, it is possible to transmit candidate band information with a smaller number of bits.

By the way, base station 300 may monitor which band is selected by each terminal in a cell and change candidate band information depending on the time according to the condition. For example, if a band is selected at one time by many bands, when candidate band information is reported the next time, candidate band information from which the band is removed is reported. In this way, it is possible to further reduce unbalance in traffic.

As described above, according to this embodiment, base station 300 transmits candidate band information using, for example, the common channel to each terminal and terminal 400 selects a band matching bandwidth capability of terminal 400 from this candidate band information, so that, compared to the case where a terminal selects a communication band from the maximum bandwidth at random, it is possible to reduce unbalance in traffic in the maximum bandwidth. Further, compared to Embodiment 1, if terminal 400 does not report bandwidth capability information of terminal 400, terminal 400 obtains band information where terminal 400 is applicable. In this way, if less uplink signaling for reporting bandwidth capability information of terminal 400 is not used, it is possible to save more radio resources.

### (Embodiment 3)

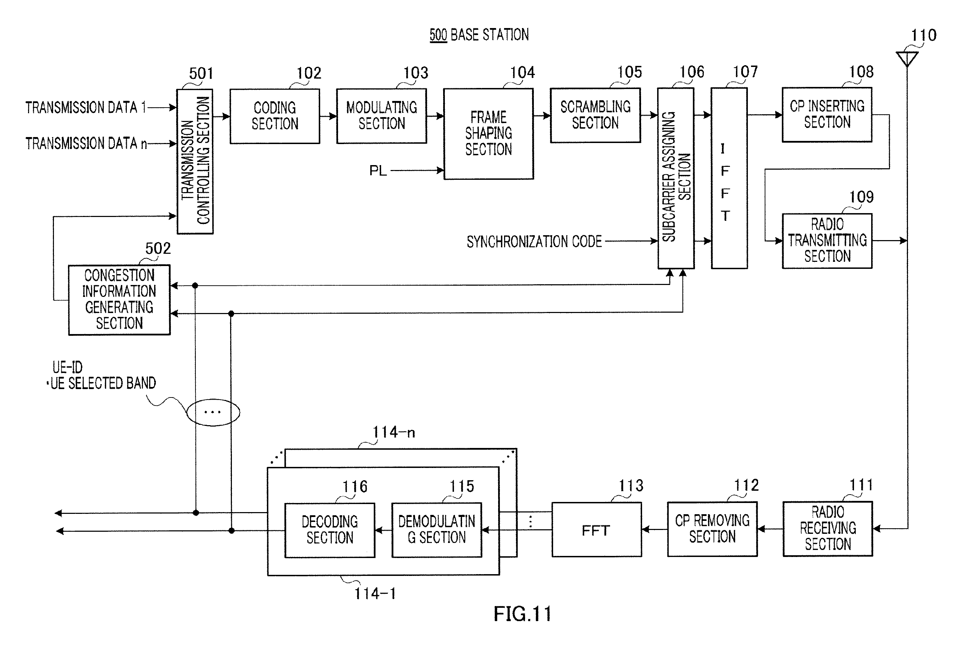

FIG.11 shows a configuration of a base station of this embodiment, and the same reference numerals will be assigned to corresponding parts of FIG. 7. Base station 500 has congestion information generating section 502. Congestion information generating section 502 inputs selected band information (UE selected band) selected by each terminal, generates congestion information showing congestion of band assignment in the maximum bandwidth based on selected band information and sends out this information to transmission controlling section 501. Transmission controlling section 501 selectively outputs transmission data 1 to n and congestion information. In this way, base station 300 of FIG. 7 transmits candidate band information, and, on the other hand, the base station of this embodiment transmits congestion information 502.

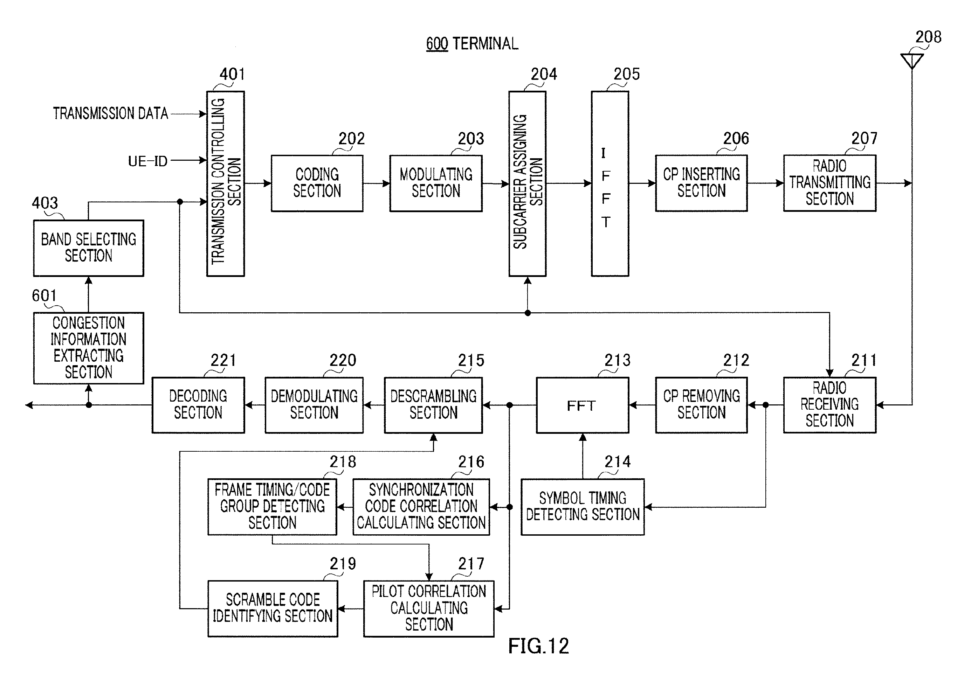

FIG.12 shows a configuration of the terminal of this embodiment, and the same reference numerals will be assigned to the corresponding parts of FIG. 8. Terminal 600 includes congestion information extracting section 601. Congestion information extracting section 601 extracts congestion information transmitted in common to each terminal from base station 500 from received data and sends out this congestion information to band selecting section 403. Band selecting section 403 selects a less congested band as the band for use of terminal 600 and sends out the selected band to transmission controlling section 401.

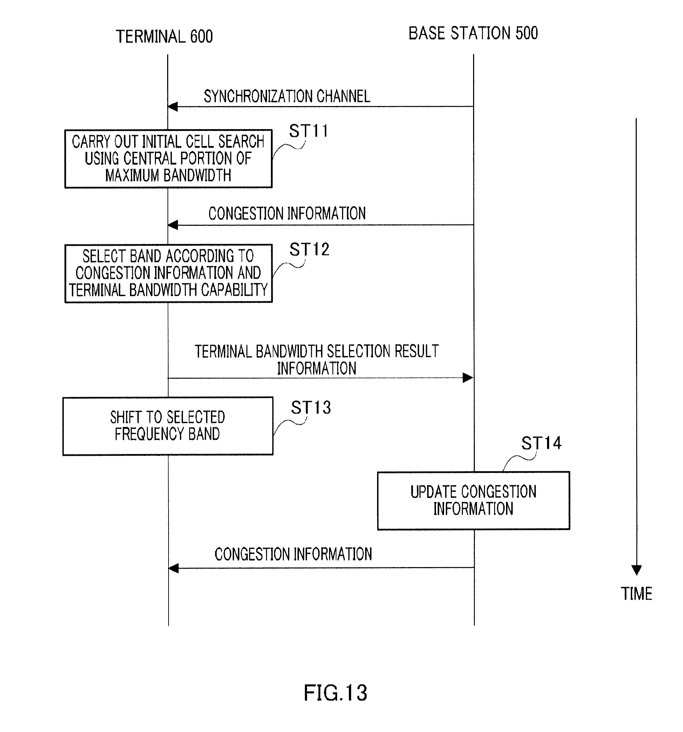

Next, operation of terminal 600 and base station 500 of this embodiment will be described with reference to FIG.13.

First, when receiving the synchronization channel from base station 500, in step ST11, terminal 600 carries out initial cell search using a synchronization signal (synchronization code) arranged on the central portion of the maximum bandwidth. Next, when receiving congestion information, in step ST12, terminal 600 selects a band according to congestion information and bandwidth capability of terminal 600. In step ST13, terminal 600 shifts the band for use to the selected band (to be more specific, adjusts a function of subcarrier assigning section 204 and radio receiving section 211 to the selected band). Further, in step ST14, base station 500 updates congestion information according to terminal band selection result information reported from terminal 600 and indicates this congestion information to terminal 600.

In this way, base station (or upper controlling apparatus) 500 manages congestion information of each current subcarrier (or raster or subcarrier block) and indicates congestion information of each subcarrier (or raster or subcarrier block) to terminal 600. Terminal 600 selects a band for use based on this congestion information. Terminal 600 reports the selected band to base station 500. Base station 500 updates congestion information based on selection information reported from terminal 600. Base station 500 transmits updated information as reporting information. Congestion information is generated by calculating, for example, the number of terminals that are currently in use or the level of congestion of each subcarrier, raster or subcarrier block.

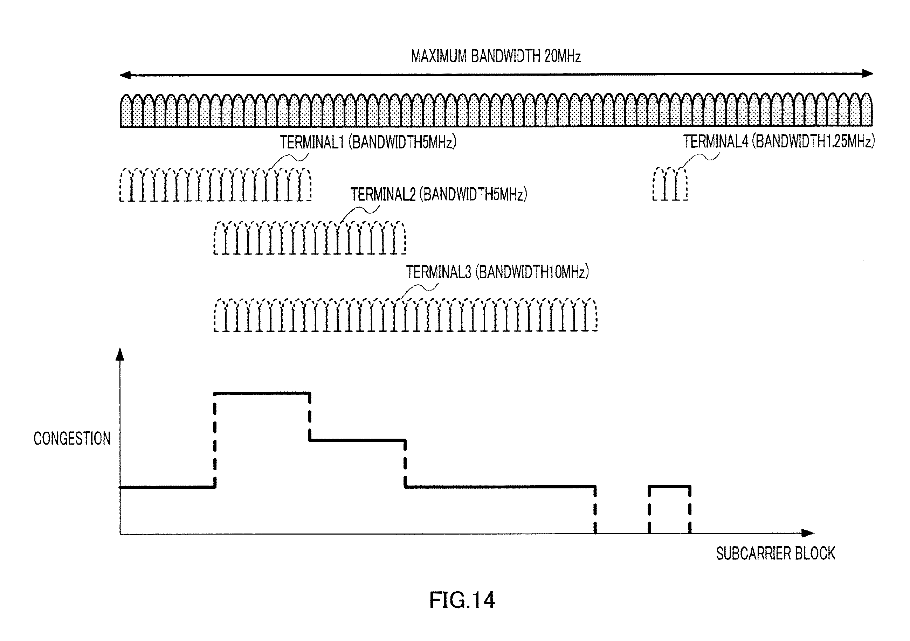

FIG. 14 shows an example of calculating congestion information indicated from base station 500 to terminal 600. In FIG.14, the horizontal axis may be subcarrier numbers, subcarrier block numbers or raster numbers. The vertical axis may be the number of terminals that use the band or shows the number of terminals by three levels of congestion. By this means, it is possible to reduce the amount of information of congestion information.

As described above, according to this embodiment, base station 500 indicates congestion information to each terminal and terminal 600 selects a less congested band as the band for use of terminal 600 based on congestion information, so that it is possible to disperse traffic in the maximum bandwidth and reduce unbalance in traffic.

The present application is based on Japanese patent application No.2005-246653, filed on August 26, 2005, the entire content of which is expressly incorporated by reference herein.

### Industrial Applicability

The scalable bandwidth system, wireless base station apparatus and wireless terminal apparatus according to the present invention can be applied to a scalable bandwidth system, wireless base station apparatus and wireless terminal apparatus that, even when there are a variety of terminals with variant bandwidth capabilities in the maximum bandwidth, can reduce unbalance in traffic in the maximum bandwidth.

## Claims

1. A scalable bandwidth system that carries out multicarrier communication by assigning on a per terminal basis flexibly bandwidths less than a plurality of maximum bandwidths supported by a radio base station apparatus as a communication band of each radio terminal apparatus, the system comprising:
a base station apparatus that transmits a synchronization signal for cell synchronization in a band determined in advance from the maximum bandwidths; and
a wireless terminal apparatus that, after acquiring cell synchronization using the received synchronization signal, transmits an identification signal of the wireless terminal apparatus and bandwidth capability information of the wireless terminal apparatus, to the wireless base station apparatus.

2. The scalable bandwidth system according to claim 1, further comprising a band assigning section that assigns a communication band to each terminal based on the identification signal and bandwidth capability information reported from the wireless terminal apparatus and transmits the communication band information of each terminal assigned by the band assigning section using a shared channel.

3. The scalable bandwidth system according to claim 2, wherein the wireless base station apparatus transmits information showing how many subcarriers a center frequency of a communication band is offset from a center frequency of a band where the synchronization signal is transmitted.

4. A wireless base station apparatus that is used in a scalable bandwidth system that carries out multicarrier communication by assigning on a per each terminal basis flexibly bandwidths less than a plurality of maximum bandwidths supported by the base station apparatus as a communication band for each wireless terminal apparatus, the apparatus comprising:
a synchronization signal transmitting section that transmits a synchronization signal for cell synchronization in a band determined in advance from the maximum bandwidths; and
a communication band information transmitting section that assigns a communication band on a per wireless terminal apparatus basis based on an identification signal and bandwidth capability information reported from each terminal and transmits the assigned communication band information of each terminal using a shared channel.

5. A wireless terminal apparatus that carries out communication using a bandwidth less than a plurality of maximum bandwidths supported by a wireless base station apparatus as a communication band, the apparatus comprising:
a synchronizing section that acquires cell synchronization based on a synchronization signal transmitted from a wireless base station apparatus using a band determined in advance;
a bandwidth capability information transmitting section that transmits an identification signal and band width capability information of the wireless terminal apparatus; and
a band assignment information receiving section that receives band assignment information assigned by a wireless base station apparatus based on the bandwidth capability information.

6. A scalable bandwidth system that carries out multicarrier communication by assigning on a per terminal basis flexibly bandwidths less than bandwidths of a plurality of maximum bandwidths supported by a wireless base station apparatus as a communication band of each wireless terminal apparatus, the system comprising:
a wireless base station apparatus that transmits a synchronization signal for cell synchronization in a band determined in advance from the maximum bandwidths and reports information of a plurality of candidate bands unique to a cell of the wireless base station apparatus using a common channel in the same band as the determined band, to each wireless terminal apparatus; and
a wireless terminal apparatus that selects a communication band with a bandwidth matching bandwidth capability of the wireless terminal apparatus from the candidate bands and carries out communication using the communication band.

7. The scalable bandwidth system according to claim 6, wherein the wireless base station apparatus transmits information as the candidate band information showing that how many subcarriers a center frequency of each candidate band is offset from a center frequency of a band where the synchronization signal is transmitted.

8. The scalable bandwidth system, wherein, when there are a plurality of communication bands of bandwidths matching bandwidth capability of the wireless terminal apparatus among the candidate bands, the wireless terminal apparatus selects one communication band at random from the plurality of communication bands.

9. The scalable bandwidth system according to claim 6, wherein:
the wireless terminal apparatus reports the communication band selected by the wireless terminal apparatus to the wireless base station apparatus; and
the wireless base station apparatus updates the information of candidate bands based on the selected communication band reported from the wireless terminal apparatus and transmits the information of candidate bands.

10. A scalable bandwidth system that carries out multicarrier communication by assigning on a per terminal basis flexibly bandwidths less than a plurality of maximum bandwidths supported by a wireless base station apparatus as a communication band for each wireless terminal apparatus, the system comprising:
a wireless base station apparatus that transmits a synchronization signal for cell synchronization in a band determined in advance from the maximum bandwidths and transmits congestion information for used subcarriers from the maximum bandwidths; and
a wireless terminal apparatus that selects a communication band based on the congestion information and bandwidth capability of the wireless terminal apparatus and carries out communication using this communication band.

11. The scalable bandwidth system according to claim 10, wherein, as the congestion, the wireless base station apparatus transmits congestion of each raster or each subcarrier block.

12. The scalable bandwidth system according to claim 10, wherein:
the wireless terminal apparatus reports a communication band selected by the wireless terminal apparatus, to the wireless base station apparatus; and
the wireless base station apparatus updates the congestion information based on the selected communication band transmitted from the wireless terminal 1 apparatus and transmits the congestion information.

13. A wireless base station apparatus that carries out multicarrier communication by assigning on a per terminal basis flexibly bandwidths less than a plurality of maximum bandwidths supported by the wireless base station apparatus as a communication band of each wireless terminal apparatus, the apparatus comprising:
a synchronization signal transmitting section that transmits a synchronization signal for cell synchronization in a band determined in advance from the maximum bandwidths; and
a congestion information transmitting section that transmits congestion information for used subcarriers in the maximum bandwidths.

14. The base station apparatus according to claim 13, wherein the congestion information transmitting section updates the congestion information based on the selected communication band transmitted from a wireless terminal apparatus and transmits the congestion information.

15. A wireless terminal apparatus that carries out communication using bandwidths less a plurality of maximum bandwidths supported by the wireless base station apparatus as communication bands, the apparatus comprising:
a synchronizing section that acquires cell synchronization based on a synchronization signal transmitted from a wireless base station apparatus using a band determined in advance;
a congestion information receiving section that receives congestion information for used subcarriers in the maximum bandwidths, the congestion information of subcarriers being transmitted from the wireless base station apparatus; and
a communication band selecting section that selects a communication band based on the congestion information and bandwidth capability of the wireless terminal apparatus.
